# EUROPÄISCHE PATENTSCHRIFT

(11) **EP 1 320 234 B1**
(45) Veröffentlichungstag und Bekanntmachung des Hinweises auf die Patenterteilung: **08.03.2006**
(21) Anmeldenummer: 01129524.3
(22) Anmeldetag: 11.12.2001
(51) Int. Cl.: H04L 29/06, H04L 12/26

(54) **Protokolltester mit einem Netzwerkprozessor**
Protocol tester with network processor
Dispositif de contrôle de protocole avec un processeur de réseau

(43) Veröffentlichungstag der Anmeldung: 18.06.2003
(73) Patentinhaber: Tektronix Berlin GmbH & Co. KG, 13629 Berlin (DE)
(72) Erfinder: Kolbe, Andreas, 12683 Berlin (DE)
(74) Vertreter: Schurack, Eduard F.

(56) Entgegenhaltungen:
- TEKTRONIX: "K1103 Protocol Tester" HTTP://WWW.TEK.COM/MEASUREMENT/PRODUCTS/CA TALOG/K1103/HW/2FW_11916_1.PDF, 1. Januar 1999 (1999-01-01), XP002200139
- ROHDE&SCHWARZ: "Protocol Tester PTW60 for Bluetooth Solutions" HTTP://WWW.TEK.COM/MEASUREMENT/PRODUCTS/CA TALOG/2DA_14925/ENG/2DA_14925_0.PDF, 1. September 2000 (2000-09-01), XP002200140
- DSSOULI R ET AL: "Test development for communication protocols: towards automation" COMPUTER NETWORKS, ELSEVIER SCIENCE PUBLISHERS B.V., AMSTERDAM, NL, Bd. 31, Nr. 17, 7. Juni 1999 (1999-06-07), Seiten 1835-1872, XP004304594 ISSN: 1389-1286
- FUNKSCHAU, HEFT 1, 2001: "Einkaufsführer - Access Messtechnik - Universaltester für den Service" HTTP://WWW.TELKO-NET.DE/HEFTARCHIV/PDF/200 1/FS0101/FS0101054.PDF, 1. Januar 2001 (2001-01-01), XP002200141

## Beschreibung

Die vorliegende Erfindung betrifft einen Protokolltester mit einem Netzwerkprozessor.

Bei der Entwicklung von Protokolltestern, die für den Aufbau und Betrieb von sogenannten mobilen Netzwerken der dritten und vierten Generation geeignet sind, müssen zwei grundlegende, aber teilweise einander gegensätzliche Aufgaben gelöst werden:

Einerseits erfordern die komplexen Simulations- und Emulationsszenarien der höheren Protokollebenen in den Bereichen Terrestrial Radio Access Network und Core Network eines derartigen Netzwerks einen hohen Grad an Flexibilität und Programmierbarkeit, verbunden mit einem hohen Speicherbedarf und hoher Rechenleistung. Eine entsprechend flexible und komfortable Schnittstelle zur Steuerung dieser Szenarien durch einen Nutzer muß ebenfalls bereitgestellt werden.

Andererseits sind dagegen bei der Anbindung eines Protokolltesters an die reale, physische Transportebene in mobilen Netzwerken folgende Randbedingungen einzuhalten: Es müssen mehrere Transportnetzwerk-Schnittstellen mit hohen und zum Teil unterschiedlichen Datenraten unterstützt werden, beispielsweise bei STM-1 155 MBit/s, bei STM-4 622 MBit/s. Dabei sind eine hohe Zahl von asynchronen, dynamischen Verbindungen der User-Ebene, die beispielsweise Sprachsignale und Email-Signale beinhaltet, und der Kontroll-Ebene, die beispielsweise Vermittlungsdaten zur Steuerung der User-Ebene beinhaltet, mit komplexen Zellen- und/oder paketbasierenden Transportprotokollen gleichzeitig in ein einzelnes Emulations-/Simulations-Szenario einzubeziehen. Hinzu kommen hohe Anforderungen bezüglich des Echtzeitverhaltens (Quality of Service; QoS) der einzelnen Verbindungen und die Notwendigkeit der Simulation von Lastfällen. Dabei ist zu berücksichtigen, daß durch die mobilen Netzwerke der neuesten Generation die klare Trennung zwischen der Kontroll-Ebene, das heißt der Ebene der Signalisierungs-/Mobilitäts-Protokolle, und der User-Ebene, das heißt der Ebene der Transportprotokolle, gefordert und spezifiziert ist, um eine getrennte Optimierung und Weiterentwicklung dieser beiden Welten zu ermöglichen. Dies führt dazu, daß in der Ebene der Transportprötokolle eine schnelle Weiterentwicklung und Veränderung der verwendeten Technologien, eine rasche Umsetzung neuer Standards und ein Wachstum der Bandbreite zu erwarten ist.

Die erstgenannten Anforderungen sind zur Zeit nur durch den Einsatz von Universalprozessoren mit der bekannten Von-Neumann-Architektur zufriedenstellend lösbar. Derartige Prozessoren sind als "Off-the-Shelf"-Komponenten für verschiedene System-/Bus-Konzepte, zum Beispiel PC, PCI, cPCl, VME, kostengünstig verfügbar.

Diese Art Prozessoren ist jedoch für den universellen Einsatz in einem Massenmarkt konzipiert und besitzen nicht die für den Einsatz in Protokolltestem relevanten Performance-kritischen Zusatzfunktionen, zum Beispiel Framing, Timing/Synchronisierung, CRC, CAM. Sie unterstützen nur standardisierte Schnittstellen zu externen Komponenten und Geräten, zum Beispiel zu einem PCI/CPU-Bus, zu Speicherbausteinen, etc. Bedingt durch die Architektur dieser Universalprozessoren, durch deren hohen Anteil an Speicherbedarf und Prozessorleistung für die Simulation/Emulation von Protokollen der höheren Protokollebenen und die notwendige Interaktion mit einer Transportnetzwerk-Schnittstelle über eine BUS-/Speicher-Schnittstelle ist es dabei zwingend notwendig, den effektiven Datenaustausch auf die absolut notwendigen, signifikanten Daten zu beschränken.

Bei der Lösung der als zweite genannten Aufgaben auf der Basis eines derartigen Universalprozessors ergeben sich die folgenden Probleme:
- Über die zur Verfügung- stehenden Standardschnittstellen des Universalprozessors müssen mittels einer angepaßten Netzwerk-Interface-Hardware eine oder mehrere physikalische Schnittstellen mit Datenraten von bis zu 155/622 MBit/s angeschlossen werden können
- Diese Interface-Hardware muß neben der Emulation der Transport-Netzwerk-Protokolle zwei Aufgaben bezüglich der höheren, auf dem Universalprozessor ausgeführten Protokoll-Emulationen/-Simulationen übernehmen können: einerseits die Reduktion des Datenflusses von/zum Universalprozessor durch Übernahme von Teilfunktionen aus der Emulation/Simulation höherer Protokoll-Ebenen, zum Beispiel Lastsimulation, Vortiltern und Vorverarbeitung von Paketen hinsichtlich Informationen aus höheren Protokollen, andererseits typische Aufgaben eines Protokolltesters, wie zum Beispiel exakte Generierung von Sende- und Empfangs-Zeitstempeln, Führung von Fehler-/Performance-Statistiken, etc.
- Im Hinblick auf zum Teil noch in der Spezifikations-Phase befindliche Protokoll-standards der Transport-Netzwerk-Protokoll-Ebene ist eine einfache Anpaßbarkeit für Protokolltester nicht nur erwünscht, sondern eine unabdingbare Voraussetzung, um auf Änderungen in den Standards ohne großen Zeitverlust bzw. ohne großen Kostenaufwand eingehen zu können.
- Weiterhin soll die Netzwerk-Interface-Hardware mit einem akzeptablen Kosten-und Zeitaufwand entwickelt und gefertigt werden können.

Aus dem Stand der Technik sind zwei Ansätze bekannt, diese Probleme anzugehen, jedoch sind beide mit einer Vielzahl von einschneidenden Nachteilen behaftet:

Ein erster Ansatz besteht darin, einen oder mehrere Standard-Hardware-Komponenten von Chip-Produzenten aus dem Netzwerkbereich zu verwenden, wie beispielsweise spezialisierte Interface-Controller, Transceiver, ASSPs (Application Specific Standard Products). Diese Komponenten sind im Hinblick auf ihren Einsatzzweck für einen breiten Massenmarkt mit hohen Stückzahlen und für zumeist etablierte Transport-Netzwerk-Technologien konzipiert und entwickelt. Daraus ergeben sich die folgenden Nachteile, die eine echte Lösung der oben angegebenen Probleme verhindem:
- Die benötigten Merkmale bzw. die benötigten Hardware-Komponenten für die physikalische Verbindung mit neu entwickelten Transport-Netzwerk-Technologien (z.B. AAL2) werden erst zu einem so späten Zeitpunkt verfügbar, daß deren Einsatz in Protokolltestern nicht akzeptabel ist, da Protokolltester vorrangig in der frühen Phase der Entwicklung und Inbetriebnahme neuer Netzwerke benötigt werden.
- Derartige Standard-Hardware-Komponenten sind bezüglich ihrer relevanten Logik, das heißt bezüglich der Firmware oder dem Mikrocode, in der Regel nicht frei programmierbar und können dadurch spezifische Anforderungen in ProtokollTest-Applikationen sehr schlecht oder gar nicht realisieren.
- Die zur Verfügung stehenden Transfer-Funktionen dieser Bauteile sind zumeist spezialisiert auf bestimmte Applikationsbereiche, beispielsweise Interworking, Switching, Voice/Video, Bulk-Transfers, mit einer hohen Anzahl von unterstützten Verbindungen und typischen Datenprofilen für die User-Ebene. Dabei spielt die Anbindung über ein Standard-Interface, zum Beispiel einen PCl-Bus, entweder eine untergeordnete Rolle oder erzeugt in Protokolltest-Applikationen eine negative Belastung der Gesamtperformance durch Interprozessor-Kommunikation und durch Übertragung irrelevanter Daten.

Bei einem zweiten Ansatz wird die Transport-Netzwerk-Interface-Hardware durch den Einsatz von FPGAs (Field Programmable Gate Arrays) und/oder ASICs (Application Specific Integrated Cuircits) eine den obigen Anforderungen angepaßte Lösung ermöglicht, insbesondere ein akzeptabler Kompromiß zwischen der Programmierbarkeit eines Software-basierenden Designs und einer Performance-optimierten Verarbeitung durch in Hardware realisierte Funktionen. Der Nachteil einer solchen Lösung besteht jedoch in den hohen Kosten und der zu langen Entwicklungsdauer, verbunden mit der Voraussetzung einer Konsolidierung bezüglich der zu unterstützenden Transport-Netzwerk-Protokolle.

Beide aus dem Stand der Technik bekannten Ansätze stellen daher keine akzeptable Lösung der oben bezeichneten Aufgaben zur Verfügung.

Die Aufgabe der vorliegenden Erfindung besteht deshalb darin, einen Protokolltester bereitzustellen, der in kostengünstiger Art und Weise ein Testen von mobilen Netzwerken der dritten und vierten Generation ermöglicht.

Diese Aufgabe wird gelöst durch einen Protokolltester mit den Merkmalen von Patentanspruch 1.

Die Erfindung basiert auf der Erkenntnis, daß Netzwerkprozessoren, die eigentlich für einen völlig anderen Einsatzzweck konzipiert sind, durch geschickte, so zwar vom Hersteller nicht vorgesehene, jedoch mögliche Verwendung von darin angeordneten Hardware-Komponenten, gegebenenfalls durch geeignete Programmierung, zur Lösung der obenbezeichneten Aufgaben geeignet sind.

Ein Netzwerkprozessor ist zum Einsatz in einem erfindungsgemäßen Protokolltester geeignet, wenn er zumindest die folgenden Merkmale aufweist:
- In ihm lassen sich Protokoll-Ebenen eines Protokoll-Stacks für mindestens ein Protokoll per Software programmieren;
- er kann gleichzeitig Eingangssignale mit unterschiedlichen Übertragungsformaten, insbesondere unterschiedlichen Taktraten verarbeiten;
- in Parallel-Architektur eine Vielzahl von Kanalanschlüssen für Netzwerkteilnehmer;
- mindestens einen Anschluß für eine nachschaltbare Verarbeitungseinheit;
- einen standardisierten Anschluß für eine Steuereinheit.

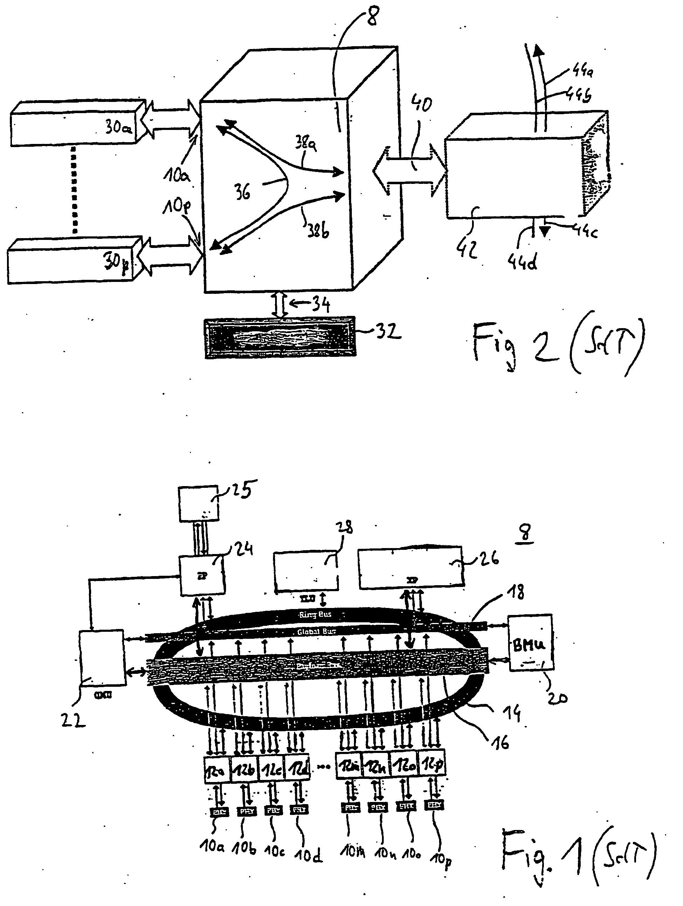

Figur 1 zeigt am Beispiel eines C-5 der Firma Motorola den Aufbau sowie grundsätzliche Komponenten eines derartigen Netzwerkprozessors. Der C-5 verfügt über 16 Anschlüsse 10a bis 10p an die physikalische Transportschicht von Netzwerkteilnehmern. Die Anschlüsse 10a bis 10p stellen gleichermaßen Eingänge in den und Ausgänge aus dem C-5 bereit. Jedem der Anschlüsse 10a bis 10p ist ein Channel-Prozessor 12a bis 12p nachgeschaltet. Jeder der Channel-Prozessoren 12a bis 12p steht mit einem Ring-Bus 14, einem Payload-Bus 16 sowie einem Global-Bus 18 in bidirektionaler Verbindung. Die Channel-Prozessoren 12a bis 12p analysieren eingehende serielle Datenströme von einem oder mehreren physikalischen Schnittstellen, führen für eingehenden Pakete entsprechende Suchalgorithmen und eventuell nachfolgende Modifikationen beziehungsweise Konvertierungen durch und leiten den resultierenden Datenstrom an einen oder mehrere Ausgangs-Channel-Prozessoren weiter ("vor"). Die Funktionsweise entspricht einer logisch flachen In-Stream-Verarbeitung.

Bei dem C-5 handelt es sich um ein Single-Chip-System mit hoher funktionaler Integration. Dieser Netzwerkprozessor verfügt über 16 frei programmierbare "Multi-Purpose" CPUs sowie über 5 Co-Prozessoren mit einer aggregierten Gesamtverarbeitungsleistung von ca. 3.000 MIPS. Jeweils vier der Multi-Purpose-CPUs können zu einem Cluster verbunden werden. Dies erlaubt eine flexible Erhöhung der Verarbeitungsleistung sowie der Menge der zu realisierenden Protokollfunktionen mittels Aggregierung der Instruktions-Speicher. Die Co-Prozessoren realisieren notwendige typische Aufgaben in Netzwerk-Applikationen, wie zum Beispiel Queueing, Buffer-Service und komplexe Suchalgorithmen. Alle Prozessoren sind innerhalb des C-5 durch die drei erwähnten Bus-Systeme verbunden, die eine Gesamt-Bandbreite von ca. 16 Gbps aufweisen.

Im Hinblick auf den Einsatzzweck eines derartigen Netzwerkprozessors 8 sind verschiedene Baugruppen, darunter die Co-Prozessoren, ebenfalls mit einem oder mehreren der Busse verbunden. Eine Buffer-Management-Einheit 20 sowie eine Queue-Management-Einheit 22 sind mit dem Global-Bus 18 und dem Payload-Bus 16 verbunden. Ein Fabric-Prozessor 24, der mit nachgeschalteten Verarbeitungseinheiten 25 verbunden ist, sowie ein Executive-Prozessor 26 sind mit dem Ring-Bus 14, dem Payload-Bus 16 sowie dem Global-Bus 18 verbunden. Eine Table-Lookup-Einheit 28 ist mit dem Ring-Bus 14 verbunden.

Figur 2 zeigt die allgemeine Funktionsweise und den typischen Einsatzbereich eines Netzwerkprozessors 8. Der Netzwerkprozessor 8 ist über seine Anschlüsse 10a bis 10p mit physikalischen Transportschichten 30a bis 30p von Netzwerkteilnehmern verbunden. Gegebenenfalls kann eine Anpaßschaltung zwischengeschaitet sein. Selbstverständlich kann auch nur ein Teil der Anschlüsse 10a bis 10p mit Netzwerkteilnehmern belegt sein. Über eine Kontrolleinheit 32, die über eine standardisierte Schnittstelle 34, beispielsweise einen PCI-Bus, mit dem Netzwerkprozessor 8 verbunden ist, kann ein Benutzer den Netzwerkprozessor 8 konfigurieren im Hinblick auf seine Aufgaben, die typischerweise die folgenden umfassen: Switching, Routing, Paket-Klassifizierung, Quality of Service-Applikationen, Paket-Modifikationen, Bandbreiten-Aggregation, lnterworking-Anwendungen, Zellen-, Paket-Konvertierung, Datenframing, Datenformatierung, Billing und Remotemonitoring. Allen Einsatzzwecken ist hierbei gemeinsam, daß der Netzwerkprozessor 8 "in-stream" arbeitet, das heißt als Vermittlungsstelle innerhalb eines Netzwerks. Dies ist in Figur 2 dadurch zum Ausdruck gebracht, daß der Netzwerkprozessor 8, wie durch den Pfeil 36 angedeutet, Signale zwischen dem Anschluß 10a und dem Anschluß 10p vermittelt. Es kann jedoch auch vorgesehen werden, wie durch die Pfeile 38a und 38b zum Ausdruck gebracht, über eine nicht standardisierte Schnittstelle 40 die Datenströme zu einer nachgeschalteten Vermittlungsstelle 42 weiterzuleiten, die dann ihrerseits, wie durch die Pfeile 44a bis 44d gekennzeichnet, Vermittlungsaufgaben nachkommt. Das beabsichtigte Einsatzgebiet von Netzwerkprozessoren sind also Vermittlungsstellen und Interworking-Einheiten innerhalb eines Netzwerks.

Die Erfindung basiert insbesondere auf der Erkenntnis, einen Netzwerkprozessor nicht mehr originär als einen intelligenten In-Stream-Prozessor zwischen Dateneingang und Datenausgang zu verwenden, sondern die Datenflüsse mit einer auf einem Universal-Host-Prozessor basierenden Protokoll-Emulations-/Simulations-Umgebung zu verbinden, so daß die Datenströme im Protokolltester terminieren. Dadurch lassen sich eine oder mehrere terminierende Netzwerkschnittstellen realisieren mit Emulations-/Simulationsfähigkeiten auf beliebigen Protokollebenen.

Dadurch lassen sich nicht nur die oben genannten, der Erfindung zugrundeliegenden Aufgaben zufriedenstellend lösen, sondern eine Vielzahl weiterer Vorteile realisieren:
- Typische Anforderungen für Protokolltester, wie beispielsweise Zeitstempel, Fehler- und Performance-Metriken, werden mit der erfindungsgemäßen Lösung auch in den komplexen mobilen Netzwerken der dritten und vierten Generation realisierbar, ohne dedizierte und aufwendige Hardware-Unterstützung. Es werden völlig neue Möglichkeiten in der Realisierung von Protokolltestapplikationen mit verschiedenen Arten von Transport-Netzwerk-Protokollen auf unterschiedlichen physikalischen Schnittstellen bereitgestellt, und zwar durch einfaches Laden der entsprechenden Software, wodurch sich eine flexible und schnelle Anpassung an Änderungen in den Protokoll-Standards erzielen läßt, ohne Änderungen der Hardware. Die ohnehin im Netzwerkprozessor vorhandenen speziellen Funktionen müssen nicht mehr vom Host geleistet werden, so daß Speicher- und Verarbeitungskapazität des Hosts für andere Zwecke genutzt werden können.

Insbesondere lassen sich alle Performance-relevanten bzw. die Performancebeeinflussenden und in Echtzeit verlaufenden Protokoll-Emulationen oder Teile davon in die im Netzwerkprozessor ablaufende Software verlagern.

Bei einer bevorzugten Ausführungsform ist im Netzwerkprozessor den Kanalanschlüssen für Netzwerkteilnehmer, insbesondere jedem Kanalanschluß für einen Netzwerkteilnehmer, zumindest ein Channel-Prozessor nachgeschaltet, wobei nur ein Teil der Kanalanschlüsse mit Netzwerkteilnehmern eines physischen Netzwerks verbunden wird und die Channel-Prozessoren der frei gebliebenen Anschlüsse, insbesondere nach Zusammenfassung in Cluster, zumindest teilweise in Form einer aufsteigenden Hierarchie miteinander verknüpft sind, um einen Protokoll-Stack zu simulieren oder zu emulieren. Diese ungewöhnliche Verwendung von eigentlich parallel angeordneten Channel-Prozessoren in einer seriellen Art und Weise, wobei einige Anschlüsse frei bleiben müssen, um die dadurch frei werdenden Channel-Prozessoren für einen derartigen hierarchischen Aufbau bereitzustellen, eröffnet die Möglichkeit, zumindest teilweise die Simulation/Emulation eines Protokoll-Stacks vom Host in den Netzwerkprozessor verlagern. Ein derart im Netzwerkprozessor aufgebautere Protokoll-Stack ermöglicht damit Emulationen von Protokoll-Ebenen auszuführen oder Teile davon, die in einem herkömmlichen Protokolltester mit den bisherigen Lösungsansätzen erst im Host und/oder mittels nachgeschalteter dezidierter Hardwarekomponenten realisierbar gewesen wäre. Der Datenfluß in dieser veränderten Anordnung erfolgt immer zwischen einem oder mehreren physischen Anschlüssen und der Host-CPU.

Bevorzugt ist der Host-Prozessor über den standardisierten Anschluß für eine Steuereinheit mit dem Netzwerkprozessor gekoppelt, das heißt die ursprünglich nur für Konfigurationszwecke vorgesehene Standardschnittstelle, vorwiegend ein PCI-Bus-Interface, wird als Datenschnittstelle von und zu Higher-Layer-Protokoll-Emulationen und -Simulationen in einer "Universal-Host-Prozessor-Umgebung" genutzt. Der im vorhergehenden Absatz genannte Datenfluß zwischen den physischen Anschlüssen und der Host-CPU erfolgt also bevorzugt über die standardisierte Schnittstelle und damit nicht unter Verwendung der im C-5 ursprünglich dafür vorgesehenen Schnittstelle.

Bevorzugt umfaßt der Netzwerkprozessor eine Vielzahl allgemein programmierbarer Prozessoren. Bei einer besonders geeigneten Variante eines Netzwerkprozessors sind die Channel-Prozessoren frei programmierbar. Damit können die Channel-Prozessoren verwendet werden, um Funktionen, die im Stand der Technik vom Host geleistet wurden, in den Netzwerkprozessor zu verlegen.

Unterstützt wird dies weiterhin dadurch, wenn der Netzwerkprozessor eine Vielzahl von Co-Prozessoren umfaßt, die ausgelegt sind für Netzwerkapplikationen, insbesondere Queueing, Buffer-Service und Suchalgorithmen.

Eine weitere Reduzierung der Belastung des Hosts kann erreicht werden, wenn der Netzwerkprozessor programmiert ist, eine Vorfilterung der an den Kanalanschlüssen zugeführten Signale vorzunehmen.

Weitere vorteilhafte Ausführungsformen der Erfindung sind den Unteransprüchen zu entnehmen.

Nachfolgend wird ein Ausführungsbeispiel der Erfindung in Bezug auf die beigefügten Zeichnungen näher dargestellt.

Sie stellen dar:
- Figur 1: In prinzipieller Darstellung den Aufbau eines zur Anwendung in einem erfindungsgemäßen Protokolltester geeigneten Netzwerkprozessors;
- Figur 2: in schematischer Darstellung einen Netzwerkprozessor in einer typischen Einsatzumgebung;
- Figur 3: in schematischer Darstellung einen erfindungsgemäßen Protokolltester mit einem Netzwerkprozessor und einem Host; und
- Figur 4: in detaillierterer Darstellung den Verlauf ausgewählter Signale in einem Netzwerkprozessor bei einem Aufführungsbeispiel eines erfindungsgemäßen Protokolltesters.

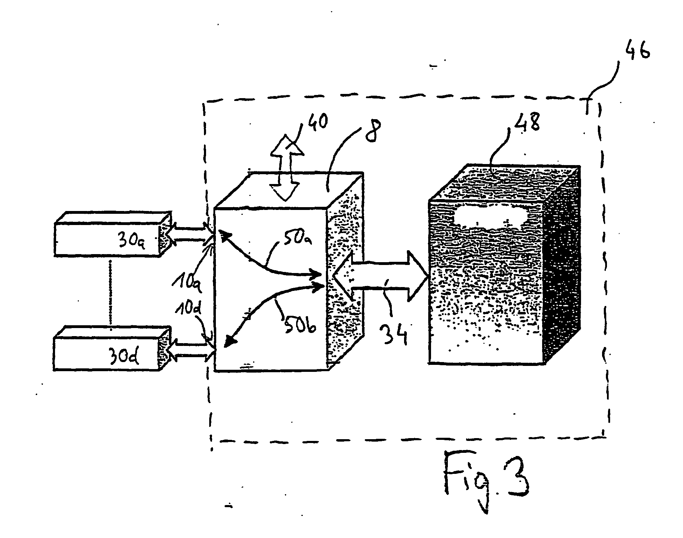

Figur 3 zeigt einen erfindungsgemäßen Protokolltester 46, der einen Netzwerkprozessor 8 sowie einen Host-(Prozessor) 48 umfaßt, die über die Standardschnittstelle 34 des Netzwerkprozessors 8 miteinander verbunden sind. Der Netzwerkprozessor 8 ist in dem dargestellten Ausführungsbeispiel mit seinen vier Anschlüssen 10a bis 10d mit physischen Transportschichten 30a bis 30d von Netzwerkteilnehmem verbunden. Wie mit den Pfeilen 50a, 50b gekennzeichnet, werden die von den physischen Transportschichten 30a bis 30d empfangenen Signale nicht auf einen anderen der für Netzwerkteilnehmer vorgesehenen Anschlüsse umgeleitet, sondern an den Host 48 weitergeleitet. Umgekehrt werden im Host 48 Signale zur Simulation/Emulation von Tests erzeugt, über die Schnittstelle 34 an den Netzwerkprozessor 8 geleitet und von dort den vorgesehenen physischen Transportschichten 30a bis 30d über die Ausgänge 10a bis 10d zugewiesen. Hervorzuheben ist, daß der Netzwerkprozessor 8 und der Host 48 über eine Schnittstelle miteinander kommunizieren, die ursprünglich für die Konfiguration des Netzwerkprozessors 8 vorgesehen war, nicht jedoch für den nunmehr darüber abgewickelten Datenverkehr. Die ursprünglich für den Datenverkehr vorgesehene Schnittstelle 40 bleibt hingegen unbenutzt.

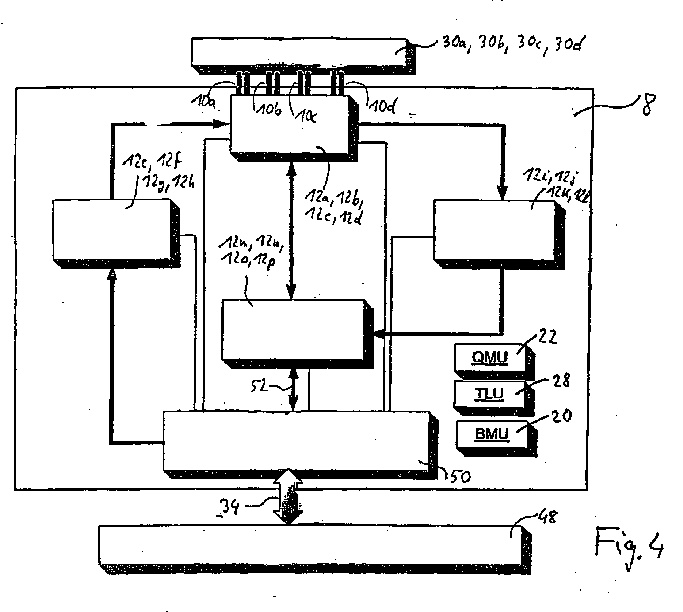

In Figur 4 ist der Verlauf von Datensignalen mit dicken Strichen dargestellt, während die dünnen Striche Verbindungen zum Austausch von Steuersignalen anzeigen. Eingangsseitig sind die vier Anschlüsse 10a bis 10d des Netzwerkprozessors 8 mit vier physischen Transportschichten 30a bis 30d verbunden. Ankommende Signale durchlaufen zunächst die zu einem ersten Cluster verbundenen Channel-Prozessoren 12a bis 12d. Das Ausgangssignal des ersten Clusters wird einem zweiten Cluster zugeführt, das von den Channel-Prozessoren 12i bis 12l gebildet wird, dessen Ausgangssignal wiederum einem dritten Cluster zugeführt wird, das von den Channel-Prozessoren 12m bis 12p gebildet wird. Das dritte Cluster steht über eine Verbindung 52 mit einem Co-Prozessor 50 in Verbindung, der die Datenübertragung zum Host 48 koordiniert. Der Co-Prozessor 50 leitet die vom Host 48 kommenden Signale zu einem vierten Cluster, das von den Channel-Prozessoren 12i bis 12h gebildet wird und mit dem ersten Cluster in Verbindung steht. Von dort werden die Signale über die Anschlüsse 10a bis 10d an die physischen Transportschichten 30a bis 30d gelegt.

Beim einem Ausführungsbeispiel eines erfindungsgemäßen Protokolltesters sind die physischen Transportschichten im Format STM-1/STS-3c. Das erste Cluster betrifft ATM (SDH/Sonet+, ATM Tx/Rx). Das zweite Cluster betrifft AAL2 Tx (AAL2 CPS 1.363.2, AAL2 SSSAR 1.366.1), das dritte Cluster AAL2 Rx (AAL2 CPS 1.363.2), während das vierte Cluster SAR betrifft (AAL5 Tx/Rx 1.363.5, AAL2 SSSAR Rx 1.366.1). Der Host-Prozessor ist realisiert durch einen PowerPC 750.

Vorliegend wird also nur ein Cluster aus vier Channel-Prozessoren für die direkte Kommunikation bis zu vier STM-1 ATM-Netzwerken verwendet, und zwar für beliebige UTRAN-Protokollschnittstellen (lu, lub, lur). Die übrigen Cluster sind derart gruppiert und verbunden, daß diese nacheinander für die nächsthöhere Protokoll-Ebene im Protokoll-Stack die Framing- bzw. Formatierungs-Funktionen, das heißt Segmentierung und Reassemblierung und die verbindungsbezogenen Protokoll-Zustandsmaschinen (vorliegend AALS, AAL2/FP) ausführen. In der C-5-Software wird die Emulation/Simulation folgender Protokolle unterstützt:
- ATM über STM-1/STS-3c (1.432.1/I.432.2)
- AAL 5 (I.363.5)
- AAL 2 (1.363.2, I.366.1 SSSAR, SSTED) in Kombination mit UMTS-Frame-Protokollen (3GPP TS 25.435, TS25.427)
- ATM-Zellen-Shaping und -Scheduling (1.371, ATM-F TM 4.x)
- AAL 2 CPS Paket-Shaping.

Bei einem Ausführungsbeispiel eines erfindungsgemäßen Protokolltesters wurden folgende Funktionen aus Protokolltest-Applikationen, die bisher nur auf dem Host-Prozessor realisiert werden konnten bzw. aufgrund zu hoher Performance-Anforderung gar nicht möglich waren, nunmehr im Netzwerkprozessor ausgeführt:
- intelligente Vorfilterung auf Inhalte und Informationselemente höher liegender Protokolle, auch über mehrere logische Verbindungen;
- Synchronisierung der Datenflüsse für höhere Protokollebenen;
- automatische, standardisierte Protokollreaktionen in performancekritischen Phasen;
- Ausführung von Last-Tests durch Generierung von Last-Profilen;
- Realisierung von komplexen Träger-Mechanismen;
- internes Zwischenspeichern von großen Mengen bereits vorgefilterter Protokoll-Daten-Einheiten für eine spätere Off-Line-Bearbeitung bzw. zum Abfangen von Last-Spitzen in asynchronen Netzwerken; und
- korrekte Sende- und Empfangszeitstempel-Verfahren für alle Protokoll-Datenblöcke entsprechend ihrem realen Transport in asynchronen zellen- oder paketorientierten Netzwerken.

## Patentansprüche

1. Protokolltester mit
a) einem Netzwerkprozessor (8), wobei der Netzwerkprozessor (8) folgende Merkmale aufweist:
- in ihm lassen sich Protokollebenen eines Protokollstacks für mindestens ein Protokoll per Software programmieren;
- er kann gleichzeitig Eingangssignale mit unterschiedlichen Übertragungsformaten, insbesondere unterschiedlichen Taktraten; verarbeiten;
- in Parallelarchitektur eine Vielzahl von Kanalanschlüssen (10a bis 10p) für Netzwerkteilnehmer (30a bis 30d);
- mindestens einen Anschluß (40) für eine nachschaltbare Verarbeitungseinheit (42);
- einen standardisierten Anschluß (34) für eine Steuereinheit (32); wobei der Netzwerkprozessor (8) für in-stream-Betrieb ausgelegt ist, d.h. an den Anschlüssen (10a bis 10d) für Netzwerkteilnehmer ankommende Signale können, gegebenenfalls nach einem Vorverarbeitungsschritt, auf mindestens einen anderen Anschluß (10a bis 10d) für Netzwerkteilnehmer umgeleitet werden, und
b) einem Host-Prozessor (48), der zur Durchführung von Protokoll-Emulationen und/oder -Simulationen programmiert ist, wobei der Host-Prozessor (48) an den Netzwerkprozessor (8) gekoppelt ist, wobei die an den Kanalanschlüssen (10a bis 10d) zugeführten Signale der Netzwerkteilnehmer im Protokolltester (46) terminieren.

2. Protokolltester nach Anspruch 1,
**dadurch gekennzeichnet,**
**daß** den Kanalanschlüssen (10a bis 10p) für Netzwerkteilnehmer, insbesondere jedem Kanalanschluß für einen Netzwerkteilnehmer, zumindest ein Channel-Prozessor (12a bis 12p) nachgeschaltet ist, wobei nur ein Teil der Kanalanschlüsse (10a bis 10d) mit Netzwerkteilnehmern (30a bis 30d) eines physischen Netzwerks verbunden wird und die Channel-Prozessoren (12e bis 12p) der frei gebliebenen Anschlüsse (10e bis 10p), insbesondere nach Zusammenfassung in Cluster, zumindest teilweise in Form einer aufsteigenden Hierarchie miteinander verknüpft sind, um einen Protokoll-Stack zu simulieren oder emulieren.

3. Protokolltester nach Anspruch 1 oder 2,
**dadurch gekennzeichnet,**
**daß** der Host-Prozessor (48) über den standardisierten Anschluß (34) für eine Steuereinheit mit dem Netzwerkprozessor (8) gekoppelt ist.

4. Protokolltester nach einem der vorhergehenden Ansprüche,
**dadurch gekennzeichnet,**
**daß** der standardisierte Anschluß (34) für eine Steuereinheit eine PCI-Schnittstelle ist.

5. Protokolltester nach einem der vorhergehenden Ansprüche,
**dadurch gekennzeichnet,**
**daß** der Netzwerkprozessor (8) eine Vielzahl allgemein programmierbarer Prozessoren (12a bis 12t) umfaßt.

6. Protokolltester nach einem Ansprüche 2 bis 5,
**dadurch gekennzeichnet,**
**daß** die Channel-Prozessoren (12a bis 12p) frei programmierbar sind.

7. Protokolltester nach einem der vorhergehenden Ansprüche,
**dadurch gekennzeichnet,**
**daß** der Netzwerkprozessor (8) eine Vielzahl von Co-Prozessoren (20, 22, 24, 26, 28, 50) umfaßt, die ausgelegt sind für Netzwerk-Applikationen, insbesondere Queueing, Buffer Service und Suchalgorithmen.

8. Protokolltester nach einem der vorhergehenden Ansprüche,
**dadurch gekennzeichnet,**
**daß** der Netzwerkprozessor (8) programmiert ist, eine Vorfilterung der an den Kanalanschlüssen (10a bis 10d) zugeführten Signal vorzunehmen.

9. Protokolltester nach einem der vorhergehenden Ansprüche,
**dadurch gekennzeichnet,**
**daß** der Netzwerkprozessor (8) ein C-5 der Firma Motorola ist.

## Claims

1. A protocol test device comprising
a) a network processor (8) having the following features:
- protocol levels of a protocol stack can be programmed in it for at least one protocol per software;
- it is capable of simultaneously processing input signals of different transmission formats, in particular of different clock rates;
- a plurality of channel ports (10a through 10d) for network subscribers (30a through 30d) in parallel architecture;
- at least one port (40) for a toppable processing unit (42);
one standardized interface (34) for a control unit (32); with the network processor (8) being designed for in-stream operation, i.e. signals arriving at the ports (10a through 10d) for network subscribers can be redirected to at least one other port (10a through 10d) for network subscribers, if necessary after a pre-processing step, and
b) a host processor (48) which has been programmed for performing protocol emulations and/or simulations, said host processor (48) being coupled to the network processor (8), with the signals of the network subscribers forwarded to the channel ports (10a through 10d) terminating in the protocol test device (46).

2. The protocol test device as claimed in claim 1 wherein said channel ports (10a through 10p) for network subscribers, in particular each channel port for a network subscriber, has at least one topped channel processor (12a through 12p), with only part of the channel ports (10a through 10d) being connected to network subscribers (30a through 30d) of a physical network, and the channel processors (12e through 12p) of the ports (10e through 10p) which have remained non-connected, in particular once they have been grouped together as clusters, being at least partially interlinked in the form of an ascending hierarchy in order to simulate or emulate a protocol stack.

3. The protocol test device as claimed in claims 1 or 2 wherein said host processor (48) is coupled to a network processor (8) via the standardized interface (34) for a control unit.

4. The protocol test device as claimed in one of the preceding claims wherein said standardized interface (34) for a control unit is a PCI interface.

5. The protocol test device as claimed in one of the preceding claims wherein said network processor (8) comprises a plurality of generally programmable processors (12a through 12t).

6. The protocol test device as claimed in claims 2 to 5 wherein said channel processors (12a through 12p) are freely programmable.

7. The protocol test device as claimed in one of the preceding claims wherein said network processor (8) comprises a plurality of co-processors (20, 22, 24, 26, 28, 50) which are designed for network applications, in particular queuing, buffer service and search algorithms.

8. The protocol test device as claimed in one of the preceding claims wherein said network processor (8) has been programmed to perform pre-filtering of the signals forwarded via the channel ports (10a through 10d).

9. The protocol test device as claimed in one of the preceding claims wherein said network processor (8) is of the Motorola C 5 type.

## Revendications

1. Testeur de protocole comportant
a) un processeur de réseau (8), le processeur de réseau (8) présentant les caractéristiques suivantes :
- il est possible de programmer en lui des niveaux de protocoles d'une pile de protocole pour au moins un protocole par logiciel ;
- il peut traiter simultanément des signaux d'entrée de formats de transmission différents, en particulier de fréquences d'horloge différentes ;
- architecture parallèle d'une pluralité de raccordements de canal (10a à 10p) pour des systèmes utilisateur (30a à 30d) ;
- au moins un raccordement (40) pour une unité de traitement en aval (42) ;
- un raccordement standardisé (34) pour une unité de commande (32) ; le processeur de réseau (8) étant conçu pour une exploitation dans un flux, autrement dit, les signaux parvenant aux raccordements (10a à 10d) pour des systèmes utilisateur peuvent, éventuellement, être détournés après une étape de traitement vers au moins un autre raccordement (10a à 10d) pour des systèmes utilisateur, et
b) un processeur hôte (48) programmé pour effectuer des émulations et/ou des simulations de protocole, le processeur hôte (48) étant couplé au processeur de réseau (8), les signaux dirigés vers les raccordements de canal (10a à 10d) des systèmes utilisateur se terminant dans le testeur de protocole (46).

2. Testeur de protocole selon la revendication 1,
**caractérisé en ce que**
aux raccordements de canal (10a à 10p) pour systèmes utilisateur, en particulier à chaque raccordement de canal pour un système utilisateur, au moins un processeur de canal (12a à 12p) est connecté en aval, une partie seulement des raccordements de canal (10a à 10d) étant reliée à des systèmes utilisateur (30a à 30d) d'un réseau physique et les processeurs de canal (12e à 12p) des raccordements demeurés libres (10e à 10p), en particulier après le regroupement en grappes, sont combinés au moins partiellement sous la forme d'une hiérarchie ascendante pour simuler ou émuler une pile de protocole.

3. Testeur de protocole selon la revendication 1 ou 2,
**caractérisé en ce que**
le processeur hôte (48) est couplé au processeur de réseau (8) par le raccordement standardisé (34) pour une unité de commande.

4. Testeur de protocole selon l'une quelconque des revendications précédentes,
**caractérisé en ce que**
le raccordement standardisé (34) pour une unité de commande est une interface PCI.

5. Testeur de protocole selon l'une quelconque des revendications précédentes,
**caractérisé en ce que**
le processeur de réseau (8) comprend une pluralité de processeurs généraux programmables (12a à 12t).

6. Testeur de protocole selon l'une quelconque des revendications 2 à 5,
**caractérisé en ce que**
les processeurs de canal (12a à 12p) sont librement programmables.

7. Testeur de protocole selon l'une quelconque des revendications précédentes,
**caractérisé en ce que**
le processeur de réseau (8) comprend une pluralité de coprocesseurs (20, 22, 24, 26, 28, 50) conçus pour des applications réseau, en particulier la gestion de files d'attente, le service tampon et les algorithmes de recherche.

8. Testeur de protocole selon l'une quelconque des revendications précédentes,
**caractérisé en ce que**
le processeur de réseau (8) est programmé pour effectuer un préfiltrage des signaux dirigés vers les raccordements de canal (10a à 10d)

9. Testeur de protocole selon l'une quelconque des revendications précédentes,
**caractérisé en ce que**
le processeur de réseau (8) est un C-5 de la société Motorola.
